# EUROPÄISCHE PATENTSCHRIFT

(11) **EP 3 410 571 B1**
(45) Veröffentlichungstag und Bekanntmachung des Hinweises auf die Patenterteilung: **07.04.2021**
(21) Anmeldenummer: 18158946.6
(22) Anmeldetag: 27.02.2018
(51) Int. Cl.: H02K 1/27, H02K 1/30

(54) **BLECHSCHNITT FÜR EINEN ROTOR EINER ELEKTRISCHEN MASCHINE, ROTOR FÜR EINE ELEKTRISCHE MASCHINE UND ELEKTRISCHE MASCHINE MIT ROTOR**
METAL SHEET FOR A ROTOR OF AN ELECTRIC MACHINE, ROTOR FOR AN ELECTRIC MACHINE, AND ELECTRICAL MACHINE COMPRISING ROTOR
LAMELLE DE TÔLE POUR UN ROTOR D'UNE MACHINE ÉLECTRIQUE, ROTOR POUR UNE MACHINE ÉLECTRIQUE ET MACHINE ÉLECTRIQUE POURVUE DE ROTOR

(30) Priorität: 31.05.2017 DE 102017209247
(43) Veröffentlichungstag der Anmeldung: 05.12.2018
(73) Patentinhaber: VOLKSWAGEN AKTIENGESELLSCHAFT, 38440 Wolfsburg (DE)
(72) Erfinder: Timm, Eike Hermann, 38108 Braunschweig (DE); Schade, Michael, 34132 Kassel (DE); Rothe, Steffen, 34225 Baunatal (DE); Deubner, Christian, 34260 Kaufungen (DE); Tasche, Matthias, 34260 Kaufungen (DE); Estorf, Malte, 38162 Cremlingen (Hemkenrode) (DE); Weikard, Fritz, 38321 Denkte (DE)

(56) Entgegenhaltungen:
- DE-A1-102013 201 199
- US-A1- 2012 200 186
- US-A1- 2014 283 373
- US-A1- 2016 233 733

## Beschreibung

Die vorliegende Erfindung betrifft einen Blechschnitt für einen Rotor einer elektrischen Maschine, wobei der Blechschnitt ein zentrales Verbindungsmittel für eine Verbindung mit einer Welle aufweist, wobei der Blechschnitt bezüglich einer Radialrichtung einen in einer Umfangsrichtung verlaufenden Außenbereich und einen zwischen dem Außenbereich und dem Verbindungsmittel angeordneten in Umfangsrichtung verlaufenden Innenbereich aufweist, wobei der Außenbereich n, n ≥ 2, entlang der Umfangsrichtung verteilt angeordnete Magnetpole aufweist, wobei die Magnetpole entsprechend den Ecken eines, insbesondere regelmäßigen, ersten n-Ecks angeordnet sind. Ferner betrifft die vorliegende Erfindung einen Rotor für eine elektrische Maschine mit einem Blechschnitt sowie eine elektrische Maschine mit einem Rotor.

### Stand der Technik

Elektrische Maschinen finden unter anderem Anwendung in Kraftfahrzeugen, insbesondere in Hybridfahrzeugen oder Elektrofahrzeugen. Eine elektrische Maschine umfasst einen Stator mit einer elektrischen Spule zur Erzeugung eines magnetischen Statorfeldes sowie einen im Inneren des Stators an einer Rotorwelle drehbar gelagerten Rotor. Der Rotor ist aus einem Blechpaket aufgebaut, wobei das Blechpaket einen oder mehrere Blechschnitte umfasst. Im Allgemeinen weisen die Blechschnitte beziehungsweise das Blechpaket ein zentrales Verbindungsmittel, insbesondere eine zentrale Aufnahmeöffnung, zur Aufnahme einer und Anbindung an eine Rotorwelle auf. Die Blechschnitte beziehungsweise das Blechpaket sind in einer Aufsicht entlang der Rotorwelle in etwa kreisförmig ausgebildet und weisen in Umfangsrichtung in einem Außenbereich in der Nähe eines Außenumfangs des Blechschnitts beziehungsweise des Blechpakets Magnetpole auf. Jeder Magnetpol kann dabei einen oder mehrere Magnete, insbesondere Permanentmagnete, aufweisen.

Die DE 10 2013 201 199 A1 offenbart eine elektrische Maschine mit einem Rotor, der zumindest ein Elektroblech aufweist, wobei das Elektroblech Stege aufweist, wobei die Stege eine Umformung normal zur Ebene des Elektroblechs aufweisen.

Aus der EP 1 662 634 A2 ist eine elektrische Maschine mit Permanentmagneten bekannt, wobei nicht-magnetische Abschnitte in einem Rotorkern ausgebildet sind, wobei die nichtmagnetischen Abschnitte an gegenüberliegenden Enden eines Permanentmagneten angeordnet sind.

Die US 2016/233733 beschreibt einen Rotor mit reduziertem Gewicht für einen Elektromotor mit einer zentralen Nabe, von der aus Speichen zu einem äußeren Ring führen, auf welchem Magnetpoolpaarungen angeordnet sind.

In der US 2012/200186 wird ein Rotorkern mit Permanentmagneten in einem Abschnitt des äußeren Umfangs offenbart, wobei die Permanentmagneten in einer V-förmigen Konfiguration angeordnet sind, welche sich nach außen öffnet.

Die US 2014/283373 offenbart ein Verfahren zur Herstellung eines Kernblechs von Rotoren, welches im Innern eines Permanentmagnetmotors eingesetzt werden kann, um das Rasten und den Verbrauch von Magnetmaterial zu minimieren und das Drehmoment zu maximieren.

Im Betrieb einer elektrischen Maschine treten starke magnetische und mechanische Kräfte auf. Durch den im Stator rotierenden Rotor greifen starke Fliehkräfte an den einzelnen Magnetpolen an. Die Fliehkräfte werden über einen Innenbereich des Rotors an ein Verbindungsmittel, in welchem die Rotorwelle aufgenommen ist, abgeleitet. Ferner bewirken die von den Magneten des Rotors, insbesondere von den Permanentmagneten, erzeugten Magnetfelder sowie die von dem Statorfeld in den Rotor eingekoppelten Magnetfelder Reluktanzkräfte oder Elektromagnetische Kräfte, welche auf einzelne Abschnitte des Rotors, insbesondere des Blechpakets oder des Blechschnitts, wirken und Spannungen in dem Material des Blechschnitts erzeugen. Die Kräfte, insbesondere die Fliehkräfte, greifen bei bekannten Blechschnitten in etwa radial an dem Verbindungsmittel zur Rotorwelle an. Dies kann zu Problemen führen, wenn die Rotorwelle mittels einer Schrumpfverbindung mit dem Blechschnitt beziehungsweise dem Blechpaket verbunden ist. Die radial wirkenden Fliehkräfte weiten das Verbindungsmittel auf, was dazu führen kann, dass die Verbindung von Blechschnitt beziehungsweise Blechpaket mit der Rotorwelle geschwächt wird. Ferner sind bekannte Blechschnitte beziehungsweise Blechpakete für Rotoren für elektrische Maschinen oft aufgrund eines hohen Materialeinsatzes zu schwer ausgebildet.

### Darstellung der Erfindung: Aufgabe, Lösung, Vorteile

Der vorliegenden Erfindung liegt die Aufgabe zugrunde, einen Blechschnitt für einen Rotor einer elektrischen Maschine bereitzustellen, welcher elektromagnetisch und mechanisch optimiert ist und eine maximale Leistungsfähigkeit bei minimalem Materialeinsatz und Gewicht und notwendiger Drehzahlfestigkeit aufweist. Ferner ist es Aufgabe der vorliegenden Anmeldung, einen Blechschnitt für einen Rotor einer elektrischen Maschine bereitzustellen, welcher eine verbesserte Verbindung des Blechschnitts mit einer Welle, insbesondere einer Rotorwelle, aufweist. Eine weitere Aufgabe der vorliegenden Erfindung liegt in der Bereitstellung eines Rotors für eine elektrische Maschine beziehungsweise in der Bereitstellung einer elektrischen Maschine mit einem Rotor, mit welchen die vorgenannten Aufgaben gelöst werden.

Zur Lösung der der Erfindung zugrundeliegenden Aufgabe wird ein Blechschnitt für einen Rotor einer elektrischen Maschine gemäß Anspruch 1 vorgeschlagen. Der Blechschnitt weist ein zentrales Verbindungsmittel für eine Verbindung mit einer Welle auf, wobei der Blechschnitt bezüglich einer Radialrichtung einen in einer Umfangsrichtung verlaufenden Außenbereich und einen zwischen dem Außenbereich und dem Verbindungmittel angeordneten in Umfangsrichtung verlaufenden Innenbereich aufweist, wobei der Außenbereich n, n ≥ 2, entlang der Umfangsrichtung verteilt angeordnete Magnetpole aufweist, wobei die Magnetpole entsprechend den Ecken eines, insbesondere regelmäßigen, ersten n-Ecks angeordnet sind, wobei zudem der Innenbereich Stege aufweist, wobei jeder Steg je zwei Magnetpole verbindet und/oder sich zwischen je zwei Magnetpolen erstreckt, wobei die Stege im Wesentlichen einen n-Stern bilden, insbesondere ein Hexagramm oder ein Oktagramm oder ein Dekagramm, wobei der n-Stern ein zweites inneres n-Eck aufweist, wobei das Verbindungsmittel in dem zweiten n-Eck angeordnet ist und mit das zweite n-Eck umrandenden Stegabschnitten der Stege verbunden ist und/oder wobei das Verbindungsmittel zumindest teilweise von den das zweite n-Eck umrandenden Stegabschnitten gebildet wird.

Der Blechschnitt ist in einer Aufsicht bevorzugt in etwa kreisförmig ausgebildet, wobei das Verbindungsmittel für eine Verbindung mit einer Welle zentral, das heißt um den Mittelpunkt des kreisförmigen Blechschnitts, angeordnet ist. In einer Radialrichtung von innen nach außen gesehen liegt außerhalb des Verbindungsmittels ein in einer Umfangsrichtung umlaufender Innenbereich. Auf den Innenbereich folgt weiter außen ein ebenfalls umlaufender Außenbereich. Der Außenbereich weist Magnetpole auf und wird daher auch Magnetkreis genannt. Der Innenbereich dient der Anbindung des Außenbereichs an das Verbindungsmittel und weist bevorzugt keine Magnetpole auf. Der Innenbereich kann auch Kraftkreis genannt werden.

Die in dem Außenbereich angeordneten Magnetpole sind über den Umfang beziehungsweise in Umfangsrichtung des Blechschnittes in dem Außenbereich angeordnet. Dabei bilden in einer Aufsicht auf den Blechschnitt die Magnetpole ein gedachtes erstes n-Eck, wobei die Magnetpole entsprechend der Ecken des ersten n-Ecks angeordnet sind. Sind beispielsweise sechs Magnetpole über den Umfang verteilt, so definieren oder bilden die Magnetpole ein Sechseck. Insbesondere kann in jedem Magnetpol ein beliebiger, jedoch bei allen Magnetpolen gleicher Punkt gewählt werden, sodass diese Punkte entsprechend den Ecken eines ersten n-Ecks angeordnet sind. Das erste n-Eck, wie im vorstehenden Beispiel das Sechseck, kann dabei regelmäßig ausgebildet sein oder unregelmäßig. Im Falle eines regelmäßig ausgebildeten n-Ecks ist der Winkelabstand zwischen den einzelnen Magnetpolen bezüglich eines Mittelpunkts des Blechschnitts stets gleich und beträgt bei einem Sechseck 60°.

Erfindungsgemäß weist der Innenbereich Stege auf, wobei jeder Steg je zwei Magnetpole verbindet und/oder sich zwischen je zwei Magnetpolen erstreckt. Die Stege bilden im Wesentlichen einen n-Stern, insbesondere ein Hexagramm oder ein Oktogramm oder ein Dekagramm. Ein n-Stern ist im Sinne der vorliegenden Erfindung ein in das gedachte erste n-Eck eingeschriebener Stern, wobei die Spitzen des Sterns an den Ecken des ersten n-Ecks, also an den Magnetpolen angrenzend angeordnet sind beziehungsweise mit den Ecken des ersten n-Ecks beziehungsweise mit den Magnetpolen verbunden sind. Der n-Stern kann dabei die Form eines überschlagenen Sternpolygons aufweisen, wobei die Kanten des überschlagenen Sternpolygons durch die Stege des Innenbereiches gebildet werden. Sind beispielsweise vier Magnetpole vorgesehen, so bilden diese im Wesentlichen ein regelmäßiges Viereck. Die Stege verbinden dann die vier Ecken des Vierecks in Form eines Vier-Sterns, welcher eine spezielle Ausgestaltung eines überschlagenen Sternpolygons darstellt. Im Falle von sechs Magnetpolen definieren die sechs Magnetpole die Ecken eines regelmäßigen Sechsecks. Die Stege sind dann bevorzugt in Form eines Hexagramms ausgerichtet und angeordnet.

Die Stege müssen dabei nicht exakt gerade ausgebildet sein, sondern können auch Krümmungen, Biegungen oder Knicke aufweisen. Wesentlich ist, dass die Stege durch ihre Ausgestaltung als n-Stern jeweils zwei Magnetpole miteinander verbinden. Dabei verbindet jeder Steg bevorzugt einen ersten Magnetpol mit einem zweiten Magnetpol, welcher bezüglich des Verbindungsmittels dem ersten Magnetpol in etwa gegenüberliegend auf der anderen Seite des Blechschnitts angeordnet ist. Die Stege sind somit bevorzugt derart ausgebildet, dass in etwa gegenüberliegende Magnetpole mechanisch miteinander verbunden sind und im Betrieb auftretende Fliehkräfte zwischen den jeweils gegenüberliegenden und durch die Stege verbundenen Magnetpole über die Stege übertragen werden. Mit anderen Worten ist je ein Magnetpol mit mindestens einem in etwa gegenüberliegenden Magnetpol derart verbunden, dass diese aneinander "aufgehängt" sind und die auf sie im Betrieb wirkenden Fliehkräfte aufeinander übertragen werden. Da die Fliehkräfte zwischen in etwa gegenüberliegenden Magnetpolen übertragen werden, greifen die Fliehkräfte wenig oder gar nicht am Verbindungsmittel an, sodass die Verbindung des Blechschnitts mit einer Welle, insbesondere mit einer Rotorwelle, verbessert wird. Insbesondere können im Fall eines Schrumpfsitzes als Verbindung am Schrumpfsitz radial angreifende Kräfte, insbesondere Fliehkräfte, welche den Schrumpfsitz schwächen würden, reduziert oder vermieden werden.

Ein n-Stern, insbesondere ein als überschlagenes Sternpolygon ausgebildeter n-Stern, umschreibt in seinem Inneren bzw. weist in seinem Inneren ein zweites n-Eck auf, welches durch Stegabschnitte der Stege definiert oder gebildet wird. Das zweite n-Eck muss nicht notwendigerweise durch gerade Stegabschnitte begrenzt oder von geraden Stegabschnitten gebildet werden. Sind die Stege zum Beispiel bogenförmig oder mit Knicken oder Biegungen ausgeführt, so wird das zweite eingeschriebene n-Eck von ebenfalls bogenförmigen oder mit Knicken oder Biegungen versehenen Stegabschnitten umrandet oder gebildet. Das Verbindungsmittel ist in dem zweiten n-Eck angeordnet und mit den das zweite n-Eck umrandenden und dieses bildenden Stegabschnitten der Stege verbunden beziehungsweise das zweite Verbindungsmittel wird zumindest teilweise von den das zweite n-Eck umrandenden Stegabschnitten gebildet. Mit anderen Worten kann das Verbindungsmittel zumindest teilweise Teil des Innenbereiches oder der Stege des Innenbereichs sein.

Da das Verbindungsmittel in dem zweiten n-Eck angeordnet ist beziehungsweise zumindest teilweise von den das zweite n-Eck umrandenden Stegabschnitten gebildet wird und da die Kraft, insbesondere die Fliehkraft, zwischen zwei im Wesentlichen gegenüberliegenden Magnetpolen entlang der Stege und Stegabschnitte übertragen wird, greifen die Fliehkräfte im Wesentlichen tangential und nicht radial an das Verbindungsmittel an, wobei sich die Kräfte, insbesondere die Fliehkräfte, gegenüberliegender Magnetpole in etwa aufheben. Dies führt vorteilhafterweise dazu, dass keine oder nur schwache radiale Kräfte auf das Verbindungsmittel wirken. Lediglich aufgrund des Materials des Verbindungsmittels selbst können radiale Fliehkräfte auftreten.

Weiter ist erfindungsgemäß vorgesehen, dass jeder Magnetpol mindestens zwei Magnete, insbesondere Permanentmagnete, umfasst, wobei ein erster Magnet und ein zweiter Magnet V-förmig zueinander ausgerichtet sind, wobei ein Winkel zwischen dem ersten Magneten und dem zweiten Magneten zwischen 110° und 120°, bevorzugt zwischen 114° und 117°, besonders bevorzugt 116°, beträgt.

Dabei sind bevorzugt der erste Magnet und der zweite Magnet derart V-förmig zueinander ausgerichtet, dass die Spitze des V in radialer Richtung des Blechschnitts nach innen weist und dass die Schenkel des V in Richtung der Außenumrandung des Blechschnitts weisen. Dabei begünstigt ein Winkel zwischen 110° und 120° zwischen dem ersten Magneten und dem zweiten Magneten eine verbesserte Verteilung der mechanischen und elektromagnetischen Spannungen.

Durch die erfindungsgemäßen Maßnahmen wird somit eine elektromagnetische und mechanische Optimierung eines Blechschnitts erhalten, wobei die Verbindung des Blechschnitts mit einer Welle insbesondere bezüglich elektromagnetischen Kräften und Fliehkräften verbessert wird, sodass verhindert wird, dass eine Verbindung, insbesondere ein Schrumpfsitz, zwischen Verbindungsmittel und Welle der elektrischen Maschine geschwächt wird.

Des Weiteren ist erfindungsgemäß vorgesehen, dass zwischen dem ersten Magneten und dem zweiten Magneten ein Trennsteg angeordnet ist, wobei der Trennsteg radial ausgerichtet ist, wobei der Trennsteg an einer Spitze des n-Sterns angeordnet ist, und insbesondere mit den eine Spitze des n-Sterns bildenden Stegen oder Stegabschnitten verbunden ist, wobei der Trennsteg ausgebildet ist, eine krafttechnische Verbindung zwischen dem Außenbereich, insbesondere dem Magnetpol, und dem Innenbereich, bereitzustellen.

Bevorzugt kann vorgesehen sein, dass zwischen den Stegen Aussparungen vorgesehen sind, und/oder dass das Verbindungsmittel ein Haltering ist, und/oder dass die Verbindung eine Schrumpfverbindung ist, und/oder dass die Welle eine Rotorwelle ist, und/oder dass das Verbindungsmittel zentral im Blechschnitt angeordnet ist, und/oder dass das Verbindungsmittel eine, insbesondere kreisförmige, Aufnahmeöffnung für die Welle aufweist.

Mit besonderem Vorteil ist zwischen den Stegen kein Material, wie beispielsweise Metall, des Blechschnitts vorhanden. Es wird durch das Vorsehen von Aussparungen ein minimaler Materialeinsatz und eine Gewichtsoptimierung ermöglicht, bei gleichzeitiger maximaler Leistungsfähigkeit und notwendiger Drehzahlfestigkeit des Blechschnitts. Zwischen den einen n-Stern bildenden Stegen beziehungsweise Stegabschnitten und zwischen einem äußeren Rand des Innenbereiches werden dabei durch die Stege und den äußeren Rand des Innenbereiches Aussparungen, insbesondere Kavitäten oder Hohlräume, definiert oder gebildet, in denen kein Material vorhanden ist. Die Stege oder Stegabschnitte oder der äußere Rand des Innenbereichs umranden die Aussparungen. Hierdurch wird das Gewicht des Blechschnitts und somit des Blechpakets und insgesamt des Rotors für eine elektrische Maschine verringert.

Das Verbindungsmittel weist bevorzugt eine, insbesondere kreisförmige Aufnahmeöffnung, für die Welle auf. Dabei kann das Verbindungsmittel bevorzugt als ein Haltering ausgebildet sein. Zur Verbindung des als Haltering ausgebildeten Verbindungsmittels mit einer Welle, insbesondere einer Rotorwelle, kann eine Schrumpfverbindung oder ein Schrumpfsitz vorgesehen sein. Insbesondere bei einer Rotorwelle mit einem kreisförmigen Wellenquerschnitt ist eine kreisförmige Aufnahmeöffnung besonders geeignet. Ein als insbesondere kreisförmiger Haltering ausgebildetes Verbindungsmittel sorgt für eine optimale Verbindung zwischen Blechschnitt und Rotorwelle.

Bevorzugt kann ferner vorgesehen sein, dass jeder Steg für n ≥ 4 zwei nicht in der Umfangsrichtung benachbarte Magnetpole verbindet. Mit anderen Worten bilden die Stege beziehungsweise die Stegabschnitte oder das Sternpolygon nicht die Seiten des gedachten ersten n-Ecks, welches durch die Magnetpole definiert wird.

Für n = 4 bilden die Magnetpole ein gedachtes Viereck, wobei je ein Magnetpol in etwa auf einer Ecke des gedachten Vierecks angeordnet ist. Die Stege laufen dann jeweils von einem ersten Magnetpol zu einem diametral gegenüberliegenden Magnetpol und müssen eine leichte Krümmung beziehungsweise Knicke oder ähnliches aufweisen, um an dem Verbindungsmittel vorbei zu laufen. Jeweils zwei sich zwischen einem ersten Magnetpol einem gegenüberliegenden zweiten Magnetpol erstreckende Stege bilden dann zusammen in etwa die Form einer Linse beziehungsweise einer Ellipse mit spitzen Ecken. Diese etwa linsen- oder ellipsenförmig ausgebildeten Stegkombinationen kreuzen sich in etwa im rechten Winkel und umschreiben in ihrem Inneren ein weiteres zweites Viereck, welches dann aufgrund der gekrümmten Stegabschnitte gekrümmte Außenseiten aufweisen kann. In diesem inneren, zweiten Viereck ist das Verbindungsmittel angeordnet. Das Verbindungsmittel kann auch durch die das zweite Viereck begrenzenden Stegabschnitte gebildet werden.

Üblicherweise sind jedoch mehr als vier Magnetpole vorgesehen, beispielsweise sind sechs, acht oder zehn Magnetpole vorgesehen. Je größer die Anzahl der Magnetpole ist, umso geringer fällt üblicherweise die Bogenform der Stege aus. Im Falle eines als Achteck ausgebildeten ersten n-Ecks kann jeder Steg einen ersten Magnetpol mit einem in Umfangsrichtung gesehen übernächsten oder überübernächsten zweiten Magnetpol verbinden.

Durch die Maßnahme, dass jeder Steg zwei nicht in Umfangsrichtung benachbarte Magnetpole verbindet, wird sichergestellt, dass die mit den Stegen verbundenen Magnetpole in etwa gegenüberliegend bezüglich der Mittelachse des Blechschnitts angeordnet sind und somit eine optimierte Fliehkraftübertragung gewährleistet wird.

Mit weiterem Vorteil kann vorgesehen sein, dass jeder Steg gerade ausgebildet ist oder dass jeder Steg im Wesentlichen bogenförmig ausgebildet ist oder dass jeder Steg, insbesondere in Richtung eines Außenumfangs des Blechschnitts, gekrümmt ist, und/oder dass jeder Steg mehrere Stegabschnitte aufweist, wobei die Stegabschnitte in einer Erstreckungsrichtung des Stegs hintereinander angeordnet sind, und/oder dass aneinander angrenzende Stegabschnitte in einem Winkel zueinander angeordnet sind, wobei der Winkel bevorzugt 0° bis 20°, besonders bevorzugt 0° bis 10°, insbesondere bevorzugt 0° bis 5°, beträgt.

Bilden beispielsweise die Stege einen Achtstern, also ein Oktagramm, so schneiden sich diese Stege an mehreren Stellen. Die Stegabschnitte, welche sich zwischen den Schnittpunkten der Stege erstrecken können gerade oder gebogen ausgebildet sein. Ferner können zwei über einen Schnittpunkt verbundene Stegabschnitte zueinander in einem Winkel stehen. Durch das Vorsehen eines Winkels kann bei geraden Stegabschnitten insgesamt eine leicht gekrümmte oder bogenförmige Form des aus den Stegabschnitten gebildeten Stegs erhalten werden.

Weiter kann vorgesehen sein, dass die Stege, insbesondere die das zweite n-Eck umrandenden Stegabschnitte, in etwa tangential mit dem Verbindungsmittel verbunden sind, und/oder dass die Stege ausgebildet sind, Kräfte, insbesondere durch im Betrieb des Blechschnitts in einer elektrischen Maschine auftretenden Fliehkräfte, von einem ersten Magnetpol auf einen zweiten Magnetpol zu übertragen, sodass auf das Verbindungsmittel im Wesentlichen keine radialen oder nur geringe, insbesondere minimale, radiale Kräfte wirken.

Dabei wird insbesondere durch die tangentiale Verbindung der Stege bzw. der Stegabschnitte mit dem Verbindungsmittel sichergestellt, dass keine oder nur schwache radiale Kräfte auf das Verbindungsmittel wirken und somit ein etwaiger Schrumpfsitz zwischen Blechschnitt beziehungsweise Verbindungsmittel und Welle weniger belastet wird.

Mit weiterem Vorteil kann vorgesehen sein, dass das Verhältnis der Breite der Stege zu der Länge der Stege zwischen 10 und 60, bevorzugt zwischen 20 und 40, besonders bevorzugt zwischen 20 und 30, beträgt.

Die Länge des Stegs wird dabei entlang des Verlaufs des Stegs von dem ersten Magnetpol zu dem zweiten Magnetpol gemessen. Die Breite des Steges bezieht sich dann auf die Breite senkrecht zu der gemessenen Länge. Mit den beschriebenen Verhältnissen wird ein optimaler Ausgleich zwischen Leistungsfähigkeit beziehungsweise Drehzahlfestigkeit und minimalem Materialeinsatz und Gewicht erzielt.

Ferner kann vorgesehen sein, dass das Verhältnis einer Breite des Innenbereiches zu einer Breite des Außenbereiches zwischen 1 und 2, bevorzugt zwischen 1,3 und 1,7, besonders bevorzugt zwischen 1,4 und 1,5, beträgt, und/oder, dass das Verhältnis eines Durchmessers des Blechschnitts zu einem Durchmesser der Aufnahmeöffnung zwischen 1 und 6, bevorzugt zwischen 2 und 5, besonders bevorzugt zwischen 3 und 3,5, beträgt.

Mit diesen Verhältnissen wird ein besonders vorteilhafter Blechschnitt erhalten, welcher in Hinsicht der elektromagnetischen und mechanischen Kräfte optimiert ist.

In weiter vorteilhafter Weise kann vorgesehen sein, dass jeder Magnetpol einen dritten Magneten aufweist, wobei der dritte Magnet tangential zu der Umfangsrichtung, insbesondere im Bereich des Außenumfangs, des Blechschnitts, angeordnet ist, und wobei der dritte Magnet bevorzugt in der Umfangsrichtung gesehen zwischen dem ersten Magneten und dem zweiten Magneten angeordnet ist. In radialer Richtung gesehen kann der dritte Magnet in etwa zwischen den Enden der Schenkel des aus dem ersten und zweiten Magneten gebildeten V angeordnet sein und verläuft in etwa parallel zu dem Außenumfang oder der Außenumrandung des Blechschnitts.

Erster, zweiter und dritter Magnet bilden einen zwischen ihnen angeordneten Reluktanzpfad für die Einkopplung eines äußeren Magnetfeldes eines Stators einer elektrischen Maschine. Dabei ist mit besonderem Vorteil der Reluktanzpfad, welcher zwischen dem dritten Magneten einerseits und den V-förmig angeordneten ersten und zweiten Magneten andererseits angeordnet ist, besonders breit ausgebildet, um eine optimale magnetische Kraftübertragung und eine optimale Einkopplung des äußeren Statorfeldes zu gewährleisten.

Besonders vorteilhaft ist vorgesehen, dass jeder Magnetpol Magnetfeldleitmittel, insbesondere eine oder mehrere Aussparungen oder Kavitäten, weiter insbesondere Luftkavitäten, aufweist, wobei das Magnetfeldleitmittel in der Umfangsrichtung gesehen an einem ersten Ende und/oder an einem zweiten Ende des dritten Magneten angrenzend angeordnet ist, und/oder wobei das Magnetfeldleitmittel an einem ersten Ende und/oder an einem zweiten Ende des ersten und/oder des zweiten Magneten angeordnet ist.

Besonders bevorzugt sind dabei die Magnetfeldleitmittel in Form von Aussparungen und Kavitäten endseitig des dritten Magneten und somit in Umfangsrichtung gesehen neben dem dritten Magneten angeordnet. Die Aussparungen oder Kavitäten befinden sich somit in etwa endseitig entlang der Erstreckungsrichtung des dritten Magneten. Ferner können auch am ersten und/oder am zweiten Magneten endseitig Magnetfeldleitmittel, insbesondere Aussparungen und Kavitäten, angeordnet sein. Durch die jeweils endseitige Anordnung der Magnetfeldleitmittel beziehungsweise der Aussparungen oder Kavitäten wird der Reluktanzpfad zwischen den dritten Magneten einerseits und den V-förmig angeordneten ersten und zweiten Magneten andererseits vorteilhafter ausdefiniert. Die Magnetfeldleitmittel, insbesondere die Aussparungen oder Kavitäten, sorgen für eine vorteilhafte Leitung des Magnetflusses in dem Rotorblech oder in dem Blechschnitt und für eine Verringerung von Reluktanzkräften beziehungsweise für eine Verringerung von elektromagnetischen und mechanischen Kräften.

Zudem erlaubt das Vorsehen von Magnetfeldleitmitteln, insbesondere von Aussparungen oder Kavitäten, eine Gewichtsreduzierung, da weniger Material für den Blechschnitt verwendet werden muss. Ein besonderes Merkmal der Magnetfeldleitmittel ist, dass sie gegenüber dem für den Blechschnitt verwendeten Material, insbesondere für das Blech, das Eisen oder den Stahl, eine geringere magnetische Permeabilität oder Leitfähigkeit aufweisen.

Weiter bevorzugt ist vorgesehen, dass ein als erste Aussparung oder Kavität ausgebildetes Magnetfeldleitmittel an einem ersten Ende des dritten Magneten angeordnet ist und dass ein zweites als Aussparung oder Kavität ausgebildetes Magnetfeldleitmittel an einem zweiten Ende des dritten Magneten angeordnet ist, und dass die erste Aussparung und die zweite Aussparung flügelförmig ausgebildet sind, wobei ein oberer Rand der ersten flügelförmigen Aussparung und ein oberer Rand der zweiten flügelförmigen Aussparung dem Außenumfang des Blechschnitts zugewandt sind.

Die Aussparungen endseitig des dritten Magneten sind in etwa dreieckförmig, wobei zwei Seiten des Dreiecks eine Bogenform aufweisen und in Richtung der Außenumrandung des Blechschnitts konvex gekrümmt sind. Die dritte, dem dritten Magneten zugewandte Seite des Dreiecks ist dabei bevorzugt gerade ausgebildet. Insgesamt werden so Magnetfeldleitmittel oder Aussparungen beziehungsweise Kavitäten gebildet, welche wie Flügel oder Vogelschwingen aussehen. Die in Form von Flügeln oder Vogelschwingen ausgebildeten Magnetfeldleitmittel weisen je eine Basis auf, welche an dem ersten Ende bzw. dem zweiten Ende des dritten Magneten angeordnet ist. Ferner weisen die in Form von Flügeln oder Vogelschwingen ausgebildeten Magnetfeldleitmittel eine Spitze auf, welche dem ersten Ende und dem zweiten Ende des Magneten abgewandt ist. Die in Form von Flügeln oder Vogelschwingen ausgebildeten Magnetfeldleitmittel verlaufen in Richtung der Außenumrandung des Blechschnitts, wobei der Flügelverlauf in Richtung der Spitze zunehmend tangential hinsichtlich des Außenumfangs des Blechschnitts verläuft.

Weiter bevorzugt können endseitig des ersten und/oder des zweiten Magneten weitere Magnetfeldleitmittel, insbesondere Aussparungen oder Kavitäten oder Luftkavitäten, angeordnet sein. Die Magnetfeldleitmittel endseitig der Schenkel des V sind dabei hinsichtlich des elektromagnetischen Kraftflusses optimiert und weisen eine breite, ausgerundete Oberschulter zur Homogenisierung des Spannungszustandes unter Belastung auf.

Ferner ist bevorzugt vorgesehen, dass die Magnete in Magnetaufnahmen, insbesondere in Magnettaschen, angeordnet sind, wobei die Magnetaufnahmen Haltevorrichtungen, insbesondere Haltevorsprünge, aufweisen.

Die Magnetaufnahmen sind bevorzugt ebenfalls als Aussparungen oder Kavitäten in dem Blechschnitt ausgebildet, und entsprechen in etwa der Außenform der einzusetzenden Magnete und sind zur Aufnahme der Magnete ausgebildet sind. Dabei weist die Umrandung oder der die Magnettaschen umrandende Bereich Haltevorrichtungen auf, welche in Form von Haltevorsprüngen dazu dienen, die in die Magnetaufnahmen eingesetzten Magnete zu fixieren.

Die Magnettaschen oder Magnetaufnahmen können dabei größer ausgebildet sein als die einzusetzenden Magnete, sodass die Magnete die Magnetaufnahme nicht vollständig ausfüllen. Die nicht ausgefüllten Bereiche der Magnetaufnahmen können dann als Magnetfeldleitmittel, insbesondere als Aussparungen oder Kavitäten beziehungsweise Luftkavitäten, ausgebildet sein. Die so ausgebildeten Magnetfeldleitmittel, insbesondere die Aussparungen oder die Luftkavitäten, können jeweils endseitig an dem ersten Magneten und/oder dem zweiten Magneten und/oder dem dritten Magneten angeordnet sein, jedoch können auch Magnetfeldleitmittel, insbesondere Aussparungen oder Luftkavitäten, seitlich der Magnete und insbesondere in radialer Richtung gesehen in etwa in Richtung des Verbindungsmittels gesehen vorgesehen sein. Bevorzugt sind die Magneten in einer Aufsicht in etwa rechteckig und länglich ausgebildet und weisen eine Längsachse und eine Querachse auf. Die Längsachse ist zwischen dem jeweils ersten Ende und dem jeweils zweiten Ende des betreffenden Magneten ausgerichtet, die Querachse ist senkrecht zu der Längsachse angeordnet und auf die Seiten des jeweiligen Magneten ausgerichtet. Die Magnetfeldleitmittel sind daher bevorzugt an dem ersten Ende und/oder dem zweiten Ende der Magnete angeordnet. Darüber hinaus können aber auch Magnetfeldleitmittel parallel zu den Magneten, das heißt an den Seiten der Magnete vorgesehen sein.

Weiter vorteilhaft kann vorgesehen sein, dass zwischen dem an dem ersten Ende des dritten Magneten angrenzend angeordneten Magnetfeldleitmittel und dem dritten Magneten und zwischen dem an dem zweiten Ende des dritten Magneten angrenzend angeordneten Magnetfeldleitmittel und dem dritten Magneten Zugstege angeordnet sind, wobei die Zugstege bevorzugt nicht radial zum Blechschnitt ausgerichtet sind, wobei die Zugstege besonders bevorzugt in Richtung des Außenumfangs aufeinander zugerichtet sind.

Die, insbesondere flügelförmigen, Magnetfeldleitmittel endseitig des dritten Magneten sind somit durch einen, insbesondere dünnen, Zugsteg von dem dritten Magneten sowie von der Magnetaufnahme des dritten Magneten abgetrennt. Diese mechanischen Zugstege sorgen für eine Verbesserung der Drehzahlfestigkeit und darüber hinaus wird mit diesen Zugstegen der elektromagnetische und der mechanische Kraftfluss optimiert. Dabei verlaufen die Zugstege von einem Mittelpunkt des Blechschnitts gesehen, insbesondere von dem Mittelpunkt der Aufnahmeöffnung des Blechschnitts, nicht radial nach außen, sondern sind bevorzugt in Richtung des Außenumfangs aufeinander zugerichtet. Das heißt, nach außen gerichtete gedachte Verlängerungslinien der Zugstege schneiden sich außerhalb des Blechschnitts.

Die die V-Form bildenden ersten und zweiten Magneten berühren einander somit nicht in der Spitze des V, sondern stattdessen bleibt in der Spitze des V ein hinsichtlich des Blechschnitts radial verlaufender Trennsteg stehen. Weisen der erste Magnet und der zweite Magnet auch im Bereich der Spitze des V ein Magnetfeldleitmittel, insbesondere eine Luftkavität auf, so werden diese Luftkavitäten durch den Trennsteg voneinander getrennt. Die Stegbreite des Trennstegs beziehungsweise die Breite der Stege ist dabei so optimiert, dass Festigkeitsanforderungen bei minimalem Gewicht gewährleistet sind. Die Stegbreiten sind zueinander in der Breite ausbalanciert und zeigen einen gleichmäßigen Kraftfluss. Insgesamt wird hinsichtlich der mechanischen Tragstruktur ein geringerer Materialeinsatz unter Einhaltung der Drehzahlfestigkeit erreicht sowie ein geringes Gewicht und damit ein geringes Trägheitsmoment bevorteilt.

Weiterhin werden elektromagnetische Kräfte, welche insbesondere im oder auf die Magneten oder in oder auf die Reluktanzpfade wirken, über den Trennsteg aus dem Außenbereich in den Innenbereich geleitet und über die Ankopplung an die Stege, insbesondere an den aus den Stegen gebildeten n-Stern, auf einen in etwa gegenüberliegenden Magnetpol weitergeleitet. Hierdurch ergibt sich eine vorteilhafte Kombination von elektromagnetischer und mechanischer Optimierung.

Anstatt des dritten Magneten können auch ein dritter und ein vierter Magnet vorgesehen sein, welche ebenfalls in V-Form angeordnet sind, jedoch einen größeren Winkel als jener zwischen dem ersten und zweiten Magneten zwischen sich einschließen, sodass der dritte und der vierte Magnet trotz einer V-förmigen Anordnung weiterhin in etwa parallel zu der Außenumrandung des Blechschnitts verlaufend angeordnet sind.

Eine weitere Lösung der der Erfindung zugrundeliegenden Aufgabe liegt in der Bereitstellung eines Rotors für eine elektrische Maschine mit einem vorbeschriebenen Blechschnitt.

Die der Erfindung zugrundeliegende Aufgabe wird zudem durch eine elektrische Maschine mit einem vorbeschriebenen Rotor umfassend einen vorbeschriebenen Blechschnitt gelöst.

Die spezielle Ausgestaltung des Magnetpols ist besonders vorteilhaft in Kombination mit der Stegkonstruktion im Innenbereich des Blechschnitts. Jedoch kann der Magnetpol zusätzlich mit anderen Innenbereichen anderer Blechschnitte verwendet werden.

### Kurze Beschreibung der Figuren

Die Erfindung wird nachstehend anhand der Figuren näher erläutert. Es zeigen:
- Fig. 1: eine Aufsicht auf einen Blechschnitt mit einem Verbindungsmittel, einem Innenbereich und einem Außenbereich,
- Fig. 2: eine weitere Aufsicht auf einen Blechschnitt,
- Fig. 3a: eine schematische Darstellung von einen Vierstern bildenden Stegen eines Blechschnitts,
- Fig. 3b: eine schematische Darstellung von einen Sechsstern bildenden Stegen eines Blechschnitts,
- Fig. 4: einen Oktanten eines Blechschnitts mit einem Magnetpol und eingezeichneten Kraftlinien,
- Fig. 5: einen Magnetpol mit drei Magneten und flügelförmigen Magnetfeldleitmitteln, und
- Fig. 6: eine weitere Aufsicht auf einen Blechschnitt.

### Ausführliche Beschreibung der Figuren

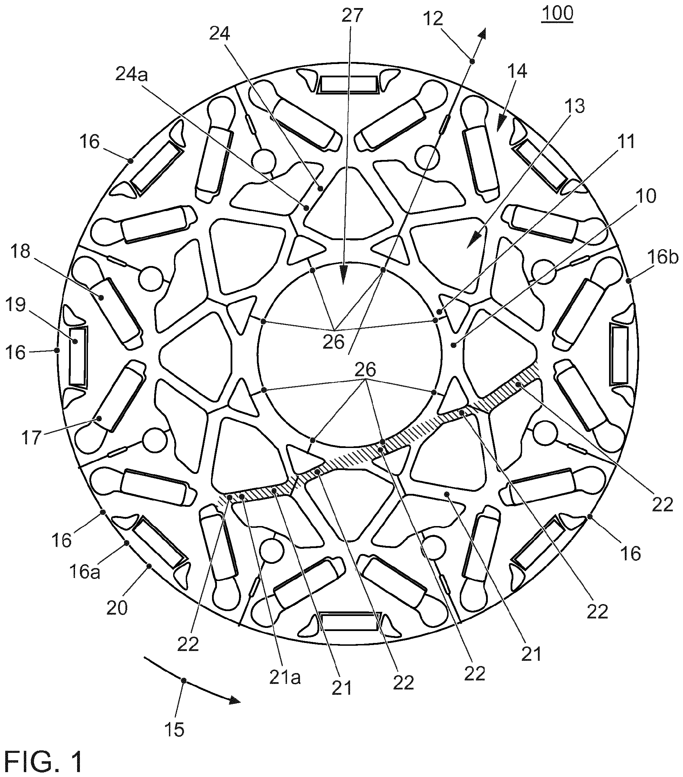

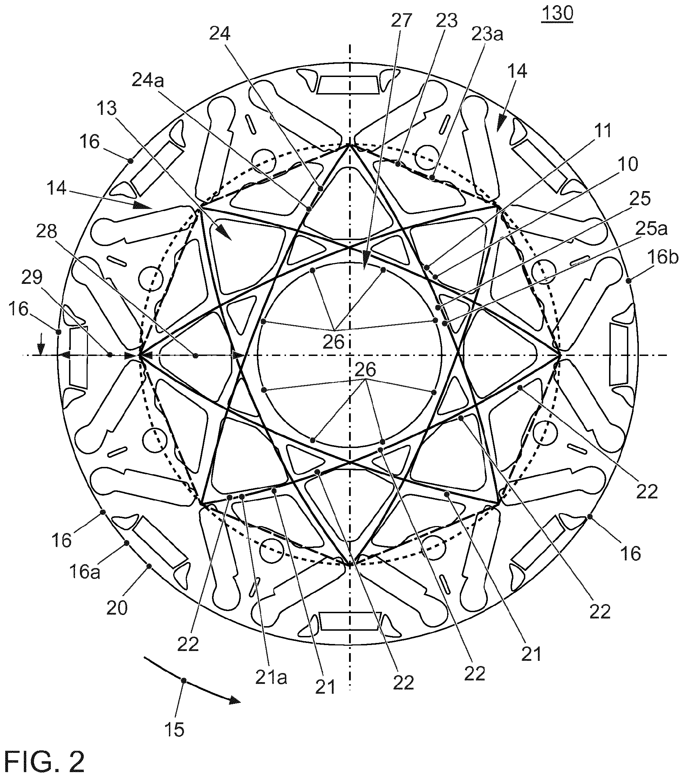

In den Fig. 1 und 2 ist ein Blechschnitt 100 für einen Rotor einer elektrischen Maschine dargestellt. Der Blechschnitt 100 weist ein zentrales Verbindungsmittel 10 auf, welches als Haltering 11 ausgebildet ist. In einer Radialrichtung 12 nach außen gesehen schließt sich an das Verbindungsmittel 10 ein Innenbereich 13 an. Weiter nach außen in Richtung der Radialrichtung 12 schließt sich an den Innenbereich 13 ein Außenbereich 14 an. In einer Umfangsrichtung 15 sind Magnetpole 16 in dem Außenbereich 14 angeordnet. Der dargestellte Blechschnitt 100 weist acht Magnetpole 16 auf.

Jeder Magnetpol 16 umfasst einen ersten Magneten 17 und einen zweiten Magneten 18, wobei der erste Magnet 17 und der zweite Magnet 18 zueinander in einer V-Form ausgerichtet sind. Ferner weist jeder Magnetpol 16 einen dritten Magneten 19 auf, welcher in etwa in Umfangsrichtung 15 tangential bezüglich eines Außenumfangs 20 des Blechschnitts 100 angeordnet ist. In Fig. 2 sind die Magneten 17, 18, 19 nicht dargestellt. Der Innenbereich 13 weist Stege 21 auf, welche jeweils zwei in etwa gegenüberliegende Magnetpole 16 verbinden beziehungsweise sich zwischen je zwei in etwa gegenüberliegenden Magnetpolen 16 erstrecken. Beispielsweise verbindet der Steg 21a einen ersten Magnetpol 16a und einen zweiten Magnetpol 16b. Steg 21a ist zur besseren Erkennbarkeit in Fig. 1 schraffiert dargestellt. Die Stege 21 weisen, wie am Steg 21a dargestellt, mehrere Stegabschnitte 22 auf, welche entlang der länglichen Erstreckung des Stegs 21a hintereinander angeordnet sind und zueinander jeweils in einem Winkel stehen. Die Magnetpole 16 sind derart angeordnet, dass sie auf den Eckpunkten eines ersten gedachten n-Ecks 23 liegen. Da acht Magnetpole 16 vorhanden sind, ist das erste n-Eck 23 als Achteck 23a ausgebildet, wie in Fig. 2 mit gestrichelten Linien angedeutet. Die Stege 21 sind in Form eines überschlagenen Polygons angeordnet und definieren einen als Achtstern 24a ausgebildeten n-Stern 24. Rein zur Veranschaulichung ist in der Fig. 2 über die Stege 21 ein Achtstern 24a, beziehungsweise ein Oktogramm, als spezielle Ausgestaltung eines n-Sterns 24 gezeichnet. Der Achtstern 24a umschreibt in seinem Inneneren ein zweites, als Achteck 25a ausgebildetes n-Eck 25, welches von Stegabschnitten 26 des Achtsterns 24a gebildet wird (Fig. 2). Das als Haltering 11 ausgebildete Verbindungsmittel 10 ist in dem zweiten Achteck 25a angeordnet und mit den das zweite Achteck 25a umrandenden Stegabschnitten 26 verbunden beziehungsweise das Verbindungsmittel 11 wird zumindest teilweise von den das zweite Achteck 25a umrandenden Stegabschnitten 26 gebildet.

Die Stege 21 verlaufen in etwa tangential zu dem Verbindungsmittel 10 beziehungsweise zum Haltering 11. Wie am Beispiel des Stegs 21a dargestellt werden entlang der Stege 21 im Betrieb auftretende Fliehkräfte und elektromagnetische Kräfte zwischen einem ersten Magnetpol 16a und einem weiten Magnetpol 16b übertragen. Der Kraftfluss wird damit gewissermaßen an dem als Haltering 11 ausgebildeten Verbindungsmittel 10 vorbeigeführt, sodass keine oder nur geringe radiale Kräfte auf den Haltering 11 wirken, bzw. sodass eine tangentiale Vorzugsrichtung für die Kräfte am Haltering 11 vorliegt und die radialen Kräfte minimal sind.

Der Haltering 11 weist eine kreisförmige Aufnahmeöffnung 27 zur Aufnahme einer nicht dargestellten Rotorwelle auf. Das Verhältnis der Breite 28 des Innenbereiches zu der Breite 29 des Außenbereiches beträgt zwischen 1,4 und 1,5.

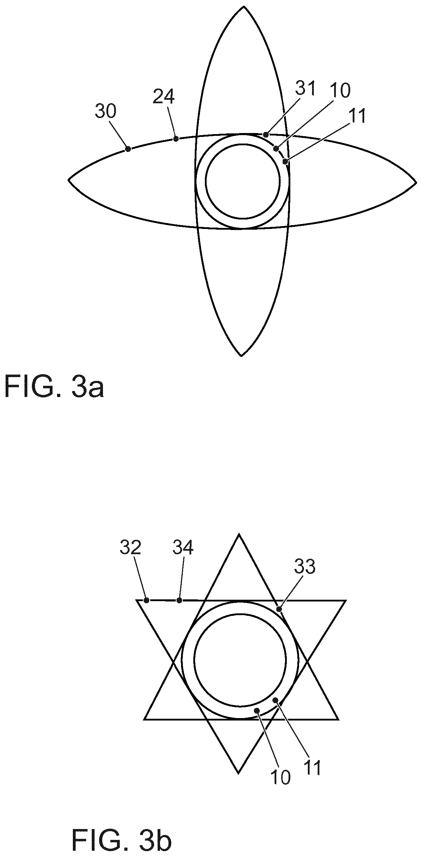

In den Fig. 3a und 3b sind schematisch weitere Beispiele von n-Sternen 24 dargestellt, welche je nach Anzahl der Magnetpole 16 von den Stegen 21 gebildet werden. Fig. 3a zeigt in schematischer Weise einen Vierstern 30, welcher ein einbeschriebenes Viereck 31 aufweist. In dem Viereck 31 ist das als Haltering 11 ausgebildete Verbindungsmittel 10 angeordnet. Fig. 3b zeigt einen Sechsstern 32 mit einem einbeschriebenen Sechseck 33 und einen in den Sechsecks 33 angeordneten Haltering 11. Weitere n-Sterne 24 wie ein Zehnstern (Dekagramm) sind ebenfalls denkbar.

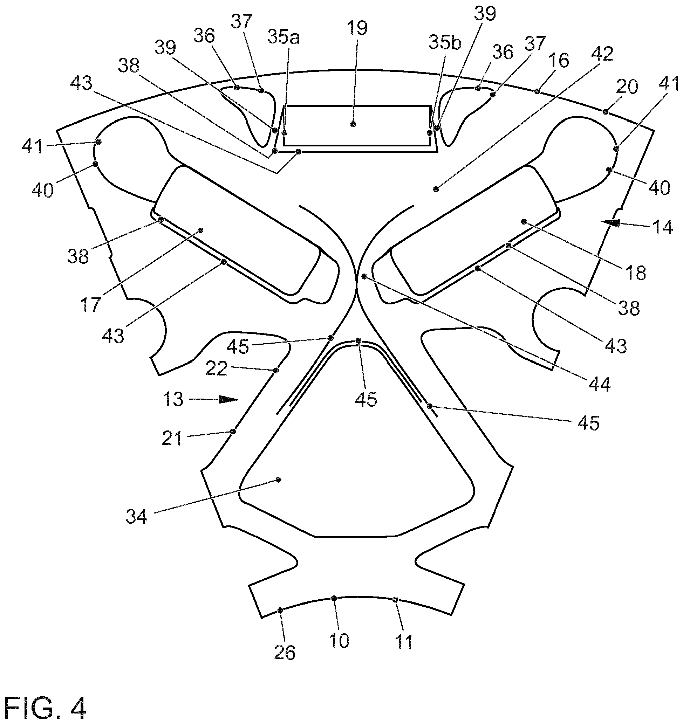

Fig. 4 zeigt einen Oktanten des Blechschnitts 100 der Fig. 1 und 2. Im Innenbereich 13 sind Stegabschnitte 22 von Stegen 21 angeordnet. Ein Abschnitt des als Haltering 11 ausgebildeten Verbindungsmittels 10 ist mit Stegabschnitten 26 verbunden. Zwischen den Stegen 21 sind Aussparungen 34 angeordnet, welche zur Gewichtsreduzierung des Blechschnitts 100 dienen. Der in Fig. 4 dargestellte Magnetpol 16 umfasst einen ersten Magneten 17, einen zweiten Magneten 18 und einen dritten Magneten 19. An einer ersten Endseite 35a des dritten Magneten 19 ist ein als flügelförmige Luftkavität 36 ausgebildetes Magnetfeldleitmittel 37 angeordnet. Ein weiteres Magnetfeldleitmittel 37 ist an einer zweiten Endseite 35b des dritten Magneten 19 in Form einer weiteren flügelförmigen Luftkavität 36 angeordnet. Die Magnete 17, 18, 19 sind jeweils in einer Magnetaufnahme 38 angeordnet. Zwischen den flügelförmigen Luftkavitäten 36 und der Magnetaufnahme 38 des ersten Magneten 19 sind Zugstege 39 angeordnet. Die Zugstege 39 sind zueinander in Richtung des Außenumfangs 20 geneigt ausgerichtet. Zwei weitere Luftkavitäten 40 sind endseitig an dem ersten Magneten 17 beziehungsweise dem zweiten Magneten 18 angeordnet und weisen eine breite ausgerundete Oberschulter 41 auf. Erster Magnet 17, zweiter Magnet 18 und dritter Magnet 19 definieren einen Reluktanzpfad 42 zur Einkopplung eines externen Statorfeldes. Weitere Magnetfeldleitmittel 37 in Form von Luftkavitäten 43 können seitlich insbesondere in Richtung des Innenbereiches 13 des ersten Magnets 17, des zweiten Magnets 18 und des dritten Magnets 19 angeordnet sein, wobei die Luftkavitäten 43 Teil der Magnetaufnahmen 38 sind. Zwischen dem ersten Magneten 17 und dem zweiten Magneten 18 ist ein Trennsteg 44 angeordnet, welcher zur krafttechnischen Verbindung des Außenbereiches 14 mit dem Innenbereich 13 dient. Zur Darstellung des Kraftflusses sind rein schematisch Kraftlinien 45 in Fig. 4 eingezeichnet.

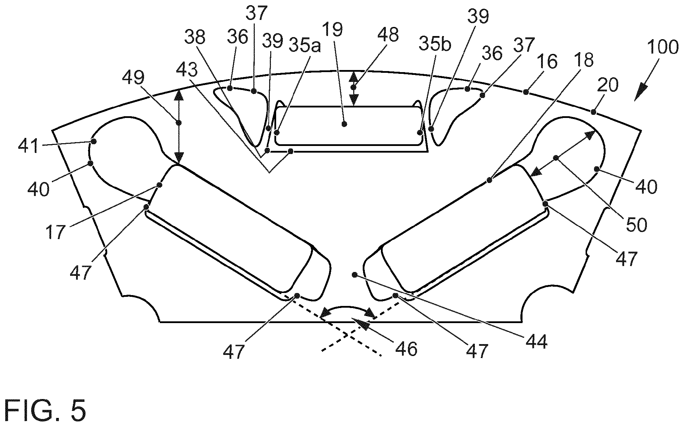

Fig. 5 zeigt eine Detaildarstellung eines Magnetpols 16. Deutlich erkennbar sind die flügelförmigen Luftkavitäten 36 an der ersten Endseite 35a und der zweiten Endseite 35b des dritten Magneten 19 durch Zugstege 39 von der Magnetaufnahme 38 des ersten Magneten 19 getrennt. Der Winkel 46 zwischen den V-förmig angeordneten ersten Magneten 17 und zweiten Magneten 18 beträgt zwischen 110° und 120°. Die Magnetaufnahmen 38 weisen zur Fixierung des Magneten 17, 18, 19 jeweils Haltevorsprünge 47 auf. Der größte Abstand 48 des dritten Magneten 19 vom Außenumfang 29 des Blechschnitts 100 beträgt 3,8 mm. Der senkrecht zum dritten Magneten 19 gemessene kürzeste Abstand 49 des ersten Magneten 17 und des zweiten Magneten 18 von dem Außenumfang 20 beträgt 7,3 mm. Der Durchmesser 50 der endseitig an dem ersten Magneten und zweiten Magneten angeordneten Luftkavität 40 beträgt 8 mm. Die vorbeschriebenen Dimensionen sind nur beispielhafter Natur und es können Abweichungen jeder Dimension im Bereich von 10% auftreten. Darüber hinaus sind die Abstände 48, 49 sowie der Durchmesser 50 auch mit der Größe des Blechschnitts 100 skalierbar, wobei bevorzugt die relativen Verhältnisse dieser Größen zueinander beibehalten werden.

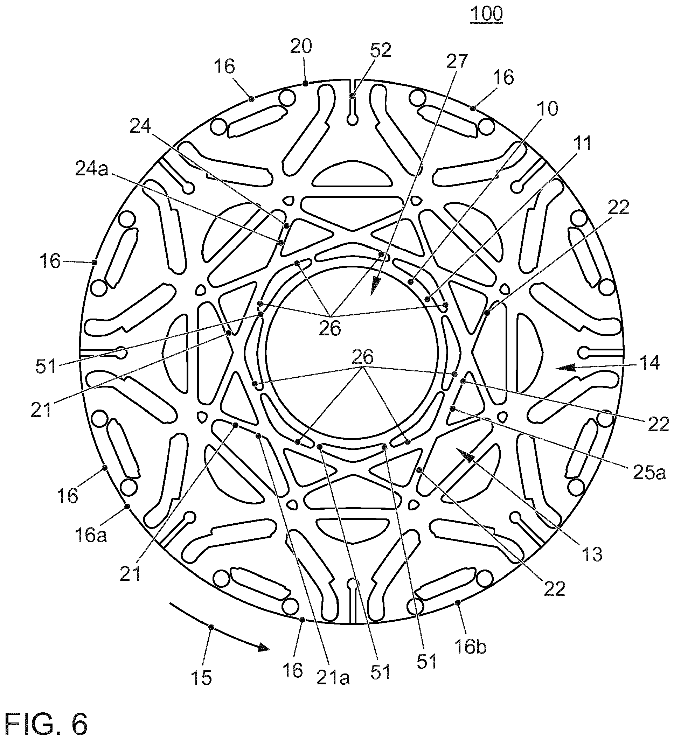

Die Fig. 6 zeigt eine weitere Aufsicht auf einen Blechschnitt 100. Wie der Blechschnitt 100 der Fig. 1 und 2 weist der Blechschnitt 100 der Fig. 6 acht Magnetpole 16 auf. Gegenüber dem Blechschnitt 100 der Fig. 1 und 2 ist jedoch der von den Stegen 21 als Achtstern 24a ausgebildete n-Stern 24 anders geformt. Die Form des Achtsterns 24a des Blechschnitts 100 der Fig. 6 ist auch als Achtort bekannt, welches ein spezielles Oktagramm darstellt. Der Vergleich der Fig. 1, 2 und 6 zeigt, dass bei dem Blechschnitt 100 der Fig. 1 und 2 jeder Steg einen ersten Magnetpol 16a mit einem zweiten Magnetpol 16b verbindet, wobei zwischen dem ersten Magnetpol 16a und dem zweiten Magnetpol 16b in Umfangsrichtung 15 gesehen zwei weitere Magnetpole 16 angeordnet sind. Bei der Ausgestaltung nach Fig. 6 befindet sich in Umfangsrichtung 15 gesehen nur ein Magnetpol 16 zwischen dem jeweils von einem Steg 21 verbundenen ersten Magnetpol 16a und zweiten Magnetpol 16b. Ein weiterer Unterschied des Blechschnitts 100 der Fig. 6 zu dem Blechschnitt 100 der Fig. 1 und 2 besteht darin, dass bei dem Blechschnitt 100 der Fig. 6 das als Haltering 11 ausgebildete Verbindungsmittel 10 über dünne Stege 51 mit den das zweite Achteck 25a umrandenden Stegabschnitten 26 verbunden ist, wohingegen in den Fig. 1 und 2 das Verbindungsmittel 10 zumindest teilweise von den das zweite Achteck 25a umrandenden Stegabschnitten 26 gebildet wird. Über die Umfangsrichtung 15 gesehen können optional noch radiale Schlitze 52 an dem Außenumfang 20 zwischen den Magnetpolen 16 vorgesehen sein.

## Patentansprüche

1. Blechschnitt (100) für einen Rotor einer elektrischen Maschine, wobei der Blechschnitt ein zentrales Verbindungsmittel (10) für eine Verbindung mit einer Welle aufweist, wobei der Blechschnitt bezüglich einer Radialrichtung (12) einen in einer Umfangsrichtung (15) verlaufenden Außenbereich (14) und einen zwischen dem Außenbereich (14) und dem Verbindungsmittel (10) angeordneten in Umfangsrichtung (15) verlaufenden Innenbereich (13) aufweist, wobei der Außenbereich (14) n, n ≥ 2, entlang der Umfangsrichtung (15) verteilt angeordnete Magnetpole (16) aufweist, wobei die Magnetpole (16) entsprechend den Ecken eines, insbesondere regelmäßigen, ersten n-Ecks (23) angeordnet sind, wobei der Innenbereich (13) Stege (21) aufweist, wobei jeder Steg (21) je zwei Magnetpole (16, 16a, 16b) verbindet und/oder sich zwischen je zwei Magnetpolen (16, 16a, 16b) erstreckt, wobei die Stege (21) im Wesentlichen einen n-Stern (24) bilden, insbesondere ein Hexagramm oder ein Oktagramm oder ein Dekagramm, wobei der n-Stern (24) ein zweites inneres n-Eck (25) aufweist, wobei das Verbindungsmittel (10) in dem zweiten n-Eck (25) angeordnet ist und mit das zweite n-Eck (25) umrandenden Stegabschnitten (22, 26) der Stege (21) verbunden ist und/oder wobei das Verbindungsmittel (10) zumindest teilweise von den das zweite n-Eck (25) umrandenden Stegabschnitten (22, 26) gebildet wird, wobei jeder Magnetpol (16) mindestens zwei Magnete (17, 18, 19) umfasst, **gekennzeichnet dadurch, dass** ein erster Magnet (17) und ein zweiter Magnet (18) V-förmig zueinander ausgerichtet sind, wobei ein Winkel (46) zwischen dem ersten Magneten (17) und dem zweiten Magneten (18) zwischen 110° und 120° beträgt und
dass zwischen dem ersten Magneten (17) und dem zweiten Magneten (18) ein Trennsteg (44) angeordnet ist, der radial ausgerichtet ist und an einer Spitze des n-Sterns (24) angeordnet ist, und insbesondere mit den eine Spitze des n-Sterns (24) bildenden Stegen (21) oder Stegabschnitten (22, 26) verbunden ist.

2. Blechschnitt (100) nach Anspruch 1, **dadurch gekennzeichnet, dass** jeder Steg (21) gerade ausgebildet ist oder dass jeder Steg (21) im Wesentlichen bogenförmig ausgebildet ist oder dass jeder Steg (21), insbesondere in Richtung eines Außenumfangs (20) des Blechschnitts (100), gekrümmt ist, und/oder dass jeder Steg (21) mehrere Stegabschnitte (22, 26) aufweist, wobei die Stegabschnitte (22, 26) in einer Erstreckungsrichtung des Stegs (21) hintereinander angeordnet sind, und/oder dass aneinander angrenzende Stegabschnitte (22, 26) in einem Winkel zueinander angeordnet sind, wobei der Winkel bevorzugt 0° bis 20°, besonders bevorzugt 0° bis 10°, insbesondere bevorzugt 0° bis 5°, beträgt.

3. Blechschnitt (100) nach Anspruch 1 oder 2, **dadurch gekennzeichnet, dass** die Stege (21), insbesondere die das zweite n-Eck (25) umrandenden Stegabschnitte (26), in etwa tangential mit dem Verbindungsmittel (10) verbunden sind, und/oder dass die Stege (21) ausgebildet sind, Kräfte, insbesondere durch im Betrieb des Blechschnitts in einer elektrischen Maschine auftretende Fliehkräfte, von einem ersten Magnetpol (16, 16a) auf einen zweiten Magnetpol (16, 16b) zu übertragen, sodass auf das Verbindungsmittel (10) im Wesentlichen keine radialen oder nur geringe, insbesondere minimale, radiale Kräfte wirken.

4. Blechschnitt (100) nach einem der vorhergehenden Ansprüche, **dadurch gekennzeichnet, dass** jeder Magnetpol (16) einen dritten Magneten (19) aufweist, wobei der dritte Magnet (19) tangential zu der Umfangsrichtung (15), insbesondere im Bereich des Außenumfangs (20), des Blechschnitts, angeordnet ist, und wobei der dritte Magnet (19) bevorzugt in der Umfangsrichtung (15) gesehen zwischen dem ersten Magneten (17) und dem zweiten Magneten (18) angeordnet ist.

5. Blechschnitt (100) nach Anspruch 4, **dadurch gekennzeichnet, dass** jeder Magnetpol (16) Magnetfeldleitmittel (37), insbesondere eine oder mehrere Aussparungen oder Kavitäten, aufweist, wobei das Magnetfeldleitmittel (37) in der Umfangsrichtung (15) gesehen an einem ersten Ende (35a) und/oder an einem zweiten Ende (35b) des dritten Magneten (19) angrenzend angeordnet ist, und/oder wobei das Magnetfeldleitmittel (37) an einem ersten Ende und/oder an einem zweiten Ende des ersten Magneten (17) und/oder des zweiten Magneten (18) angeordnet ist,

6. Blechschnitt (100) nach Anspruch 5, **dadurch gekennzeichnet, dass** eine erste Aussparung oder Kavität an einem ersten Ende (35a) des dritten Magneten (19) angeordnet ist und dass eine zweite Aussparung oder Kavität an einem zweiten Ende (35b) des dritten Magneten (19) angeordnet ist, und dass die erste Aussparung und die zweite Aussparung flügelförmig ausgebildet sind, wobei ein oberer Rand der ersten flügelförmigen Aussparung und ein oberer Rand der zweiten flügelförmigen Aussparung dem Außenumfang (20) des Blechschnitts zugewandt sind.

7. Blechschnitt (100) nach einem der Ansprüche 4 bis 6, **dadurch gekennzeichnet, dass** die Magnete (17, 18, 19) in Magnetaufnahmen (38), insbesondere in Magnettaschen, angeordnet sind, wobei die Magnetaufnahmen (38) Haltevorrichtungen, insbesondere Haltevorsprünge (47), aufweisen, und/oder dass zwischen dem an dem ersten Ende (35a) des dritten Magneten (19) angrenzend angeordneten Magnetfeldleitmittel (37) und dem dritten Magneten (19) und zwischen dem an dem zweiten Ende (35b) des dritten Magneten (19) angrenzend angeordneten Magnetfeldleitmittel (37) und dem dritten Magneten (19) Zugstege (39) angeordnet sind, wobei die Zugstege (39) bevorzugt nicht radial zum Blechschnitt ausgerichtet sind, wobei die Zugstege (39) besonders bevorzugt in Richtung des Außenumfangs (20) aufeinander zugerichtet sind.

8. Blechschnitt (100) nach einem der vorgenannten Ansprüche, **dadurch gekennzeichnet, dass** zwischen dem ersten Magneten (17) und dem zweiten Magneten (18) ein Trennsteg (44) angeordnet ist, wobei der Trennsteg (44) radial ausgerichtet ist, wobei der Trennsteg (44) an einer Spitze des n-Sterns (24) angeordnet ist, und insbesondere mit den eine Spitze des n-Sterns (24) bildenden Stegen (21) oder Stegabschnitten (22) verbunden ist, wobei der Trennsteg (44) ausgebildet ist, eine krafttechnische Verbindung zwischen dem Außenbereich (14), insbesondere dem Magnetpol (16), und dem Innenbereich (13) bereitzustellen.

9. Rotor für eine elektrische Maschine mit einem Blechschnitt (100) nach einem der Ansprüche 1 bis 8.

## Claims

1. Metal sheet (100) for a rotor of an electrical machine, wherein the metal sheet has a central connecting means (10) for a connection with a shaft; wherein the metal sheet, with regard to a radial direction (12), has an outer region (14) running in a circumferential direction (15) and an inner region (13) running in a circumferential direction (15) and arranged between the outer region (14) and the connecting means (10); wherein the outer region (14) has n, n ≥ 2 magnetic poles (16) arranged distributed along the circumferential direction (15); wherein the magnetic poles (16) are arranged corresponding to the vertices of an, in particular regular, first n-sided polygon (23); wherein the inner region (13) has webs (21); wherein each web (21) connects two magnetic poles (16, 16a, 16b) in each instance, and/or extends between two magnetic poles (16, 16a, 16b) in each instance; wherein the webs (21) essentially form an n-sided star (24), in particular a hexagram or an octagram or a decagram; wherein the n-sided star (24) has a second inner n-sided polygon (25); wherein the connecting means (10) is arranged inside the second n-sided polygon (25) and is connected with web segments (22, 26) of the webs (21) that border the second n-sided polygon (25); and/or wherein the connecting means (10) is formed at least partially by the web segments (22, 26) that border the second n-sided polygon (25); wherein each magnetic pole (16) comprises at least two magnets (17, 18, 19); **characterized in that** a first magnet (17) and a second magnet (18) are oriented relative to one another in a V-shape, wherein an angle (46) between the first magnet (17) and the second magnet (18) measures between 110° and 120°, and
**in that** a separating web (44) is arranged between the first magnet (17) and the second magnet (18), is oriented radially, and is arranged at a tip of the n-sided star (24), and is connected in particular to the webs (21) or web segments (22, 26) forming a tip of the n-sided star (24).

2. Metal sheet (100) according to Claim 1, **characterized in that** each web (21) is straight in shape; or **in that** each web (21) is essentially arcuate; or **in that** each web (21) is curved, in particular in the direction of an outer circumference (20) of the metal sheet (100); and/or **in that** each web (21) has a plurality of web segments (22, 26), wherein the web segments (22, 26) are arranged one after another in an extension direction of the web (21); and/or **in that** adjacent web segments (22, 26) are arranged at an angle to one another, wherein the angle is preferably 0° to 20°, more preferably 0° to 10°, particularly preferably 0° to 5°.

3. Metal sheet (100) according to Claims 1 or 2, **characterized in that** the webs (21), in particular the web segments (26) bordering the second n-sided polygon (25), are connected approximately tangentially to the connecting means (10); and/or **in that** the webs (21) are designed to transmit forces, in particular centrifugal forces occurring in the operation of the metal sheet in an electrical machine, from a first magnetic pole (16, 16a) to a second magnetic pole (16, 16b), so that essentially no radial forces or only slight, in particular minimal, radial forces act on the connecting means (10).

4. Metal sheet (100) according to any one of the preceding claims, **characterized in that** each magnet pole (16) has a third magnet (19), wherein the third magnet (19) is arranged tangentially to the circumferential direction (15) of the metal sheet, in particular in the region of the outer circumference (20); and wherein the third magnet (19) is preferably arranged between the first magnet (17) and the second magnet (18) as viewed in the circumferential direction (15).

5. Metal sheet (100) according to Claim 4, **characterized in that** each magnetic pole (16) has magnetic field conducting means (37), in particular one or more recesses or cavities, wherein the magnetic field conducting means (37) is arranged adjacent to a first end (35a) and/or to a second end (35b) of the third magnet (19), as seen in the circumferential direction (15); and/or wherein the magnetic field conducting means (37) is arranged at a first end and/or at a second end of the first magnet (17) and/or of the second magnet (18).

6. Metal sheet (100) according to Claim 5, **characterized in that** a first recess or cavity is arranged at a first end (35a) of the third magnet (19); and **in that** a second recess or cavity is arranged at a second end (35b) of the third magnet (19); and **in that** the first recess and the second recess are wing-shaped, wherein an upper edge of the first wing-shaped recess and an upper edge of the second wing-shaped recess face toward the outer circumference (20) of the metal sheet.

7. Metal sheet (100) according to any one of Claims 4 to 6, **characterized in that** the magnets (17, 18, 19) are arranged in magnet receptacles (38), in particular in magnet pockets, wherein the magnet receptacles (38) have retention devices, in particular retention lugs (47); and/or **in that** tension webs (39) are arranged between the magnetic field conducting means (37) arranged adjacent to the first end (35a) of the third magnet (19) and the third magnet (19), and between the magnetic field conducting means (37) arranged adjacent to the second end (35b) of the third magnet (19) and the third magnet (19); wherein the tension webs (39) are preferably not aligned radially to the metal sheet; wherein the tension webs (39) are particularly preferably aligned to one another in the direction of the outer circumference (20).

8. Metal sheet (100) according to any one of the aforementioned claims, **characterized in that** a separating web (44) is arranged between the first magnet (17) and the second magnet (18), wherein the separating web (44) is oriented radially; wherein the separating web (44) is arranged at a tip of the n-sided star (24), and is connected in particular to webs (21) or web segments (22) forming a tip of the n-sided star (24); wherein the separating web (44) is designed to provide a connection in terms of force between the outer region (14), in particular the magnetic pole (16), and the inner region (13).

9. Rotor for an electrical machine, having a metal sheet (100) according to any one of Claims 1 to 8.

## Revendications

1. Lamelle de tôle (100) pour un rotor d'une machine électrique, la lamelle de tôle présentant un moyen de liaison central (10) pour une liaison à un arbre, la lamelle de tôle présentant, par rapport à un sens radial (12), une zone externe (14) s'étendant dans un sens périphérique (15) et une zone interne (13) s'étendant dans le sens périphérique (15), agencée entre la zone externe (14) et le moyen de liaison (10), la zone externe (14) présentant n pôles magnétiques (16), n ≥ 2, agencés de manière répartie le long du sens périphérique (15), les pôles magnétiques (16) étant agencés selon les angles d'un premier polygone à n côtés (23) en particulier régulier, la zone interne (13) présentant des entretoises (21), chaque entretoise (21) reliant à chaque fois deux pôles magnétiques (16, 16a, 16b) et/ou s'étendant entre à chaque fois deux pôles magnétiques (16, 16a, 16b), les entretoises (21) formant essentiellement une étoile à n pointes (24), en particulier un hexagramme ou un octogramme ou un décagramme, l'étoile à n pointes (24) présentant un deuxième polygone interne à n côtés (25), le moyen de liaison (10) étant agencé dans le deuxième polygone à n côtés (25) et étant relié à des segments d'entretoise (22, 26), entourant le deuxième polygone à n côtés (25), des entretoises (21) et/ou le moyen de liaison (10) étant formé au moins partiellement par les segments d'entretoise (22, 26) entourant le deuxième polygone à n côtés (25), chaque pôle magnétique (16) comprenant au moins deux aimants (17, 18, 19), **caractérisée en ce qu'**un premier aimant (17) et un deuxième aimant (18) sont orientés en forme de V l'un par rapport à l'autre, un angle (46) entre le premier aimant (17) et le deuxième aimant (18) valant entre 110° et 120° et
**en ce qu'**une entretoise de séparation (44) est agencée entre le premier aimant (17) et le deuxième aimant (18), laquelle entretoise est orientée radialement et agencée au niveau d'une pointe de l'étoile à n pointes (24) et en particulier reliée aux segments d'entretoise (22, 26) ou entretoises (21) formant une pointe de l'étoile à n pointes (24).

2. Lamelle de tôle (100) selon la revendication 1, **caractérisée en ce que** chaque entretoise (21) est conçue de manière droite ou **en ce que** chaque entretoise (21) est conçue essentiellement en forme d'arc ou **en ce que** chaque entretoise (21), en particulier en direction d'une périphérie externe (20) de la lamelle de tôle (100), est incurvée et/ou **en ce que** chaque entretoise (21) présente plusieurs segments d'entretoise (22, 26), les segments d'entretoise (22, 26) étant disposés l'un derrière l'autre dans une direction d'extension de l'entretoise (21) et/ou **en ce que** les segments d'entretoise (22, 26) adjacents l'un à l'autre sont disposés sous un angle l'un par rapport à l'autre, l'angle valant de préférence 0° à 20°, de manière particulièrement préférée 0° à 10°, en particulier de préférence 0° à 5°.

3. Lamelle de tôle (100) selon la revendication 1 ou 2, **caractérisée en ce que** les entretoises (21), en particulier les segments d'entretoise (26) entourant le deuxième polygone à n côtés (25), sont relié(e)s de manière environ tangentielle au moyen de liaison (10) et/ou **en ce que** les entretoises (21) sont conçues pour transmettre des forces, en particulier des forces centrifuges survenant lors du fonctionnement de la lamelle de tôle dans une machine électrique, depuis un premier pôle magnétique (16, 16a) vers un deuxième pôle magnétique (16, 16b), de telle sorte que le moyen de liaison (10) ne subisse essentiellement pas de forces radiales ou uniquement des forces radiales faibles, en particulier minimales.

4. Lamelle de tôle (100) selon l'une quelconque des revendications précédentes, **caractérisée en ce que** chaque pôle magnétique (16) présente un troisième aimant (19), le troisième aimant (19) étant agencé tangentiellement par rapport au sens périphérique (15), en particulier dans la zone de la périphérie externe (20), de la lamelle de tôle et le troisième aimant (19) étant de préférence agencé, vu dans le sens périphérique (15), entre le premier aimant (17) et le deuxième aimant (18).

5. Lamelle de tôle (100) selon la revendication 4, **caractérisée en ce que** chaque pôle magnétique (16) présente des moyens de guidage de champ magnétique (37), en particulier un(e) ou plusieurs évidements ou cavités, le moyen de guidage de champ magnétique (37) étant agencé, vu dans le sens périphérique (15), de manière adjacente à une première extrémité (35a) et/ou à une deuxième extrémité (35b) du troisième aimant (19) et/ou le moyen de guidage de champ magnétique (37) étant agencé au niveau d'une première extrémité et/ou au niveau d'une deuxième extrémité du premier aimant (17) et/ou du deuxième aimant (18),

6. Lamelle de tôle (100) selon la revendication 5, **caractérisée en ce qu'**un premier évidement ou une première cavité est agencé(e) au niveau d'une première extrémité (35a) du troisième aimant (19) et **en ce qu'**un deuxième évidement ou une deuxième cavité est agencé(e) au niveau d'une deuxième extrémité (35b) du troisième aimant (19) et **en ce que** le premier évidement et le deuxième évidement sont conçus en forme d'aile, un bord supérieur du premier évidement en forme d'aile et un bord supérieur du deuxième évidement en forme d'aile étant orientés vers la périphérie externe (20) de la lamelle de tôle.

7. Lamelle de tôle (100) selon l'une quelconque des revendications 4 à 6, **caractérisée en ce que** les aimants (17, 18, 19) sont agencés dans des logements d'aimant (38), en particulier dans des poches d'aimant, les logements d'aimant (38) présentant des dispositifs de maintien, en particulier des saillies de maintien (47) et/ou **en ce que** des entretoises de traction (39) sont agencées entre le moyen de guidage de champ magnétique (37) agencé de manière adjacente à la première extrémité (35a) du troisième aimant (19) et le troisième aimant (19) et entre le moyen de guidage de champ magnétique (37) agencé de manière adjacente à la deuxième extrémité (35b) du troisième aimant (19) et le troisième aimant (19), les entretoises de traction (39) n'étant de préférence pas orientées radialement par rapport à la lamelle de tôle, les entretoises de traction (39) étant orientées de manière particulièrement préférée l'une vers l'autre en direction de la périphérie externe (20).

8. Lamelle de tôle (100) selon l'une quelconque des revendications précédentes, **caractérisée en ce qu'**une entretoise de séparation (44) est agencée entre le premier aimant (17) et le deuxième aimant (18), l'entretoise de séparation (44) étant orientée radialement, l'entretoise de séparation (44) étant agencée au niveau d'une pointe de l'étoile à n pointes (24) et en particulier reliée aux segments d'entretoise (22) ou aux entretoises (21) formant une pointe de l'étoile à n pointes (24), l'entretoise de séparation (44) étant conçue pour réaliser une liaison technique à force entre la zone externe (14), en particulier le pôle magnétique (16), et la zone interne (13).

9. Rotor pour une machine électrique présentant une lamelle de tôle (100) selon l'une quelconque des revendications 1 à 8.
